(19) Europäisches Patentamt
European Patent Office
Office européen des brevets

(11) Veröffentlichungsnummer: **0 600 315 A1**

# (12) EUROPÄISCHE PATENTANMELDUNG

(21) Anmeldenummer: **93118594.6**

(51) Int. Cl.$^5$: **A01N 43/50**, B27K 3/34

(22) Anmeldetag: **18.11.93**

(30) Priorität: **01.12.92 DE 4240308**
**01.12.92 DE 4240310**

(43) Veröffentlichungstag der Anmeldung:
**08.06.94 Patentblatt 94/23**

(84) Benannte Vertragsstaaten:
**AT BE CH DE DK ES FR GB IT LI NL PT SE**

(71) Anmelder: **BAYER AG**

**D-51368 Leverkusen(DE)**

(72) Erfinder: **Schwamborn, Michael, Dr.**
**Prämonstratenser Strasse 76**
**D-51069 Köln(DE)**
Erfinder: **Kunisch, Franz, Dr.**
**Zum Hahnenberg 20**
**D-51519 Odenthal(DE)**
Erfinder: **Schade, Gerold, Dr.**
**Am Mittelberg 1a**
**D-51375 Leverkusen(DE)**
Erfinder: **Ludwig, Georg-Wilhelm, dR.**
**Kemmerhofstrasse 181**
**D-47802 Krefeld(DE)**
Erfinder: **Kugler, Martin, Dr.**
**Am Kloster 47**
**D-42799 Leichlingen(DE)**
Erfinder: **Paulus, Wilfried, Dr.**
**Deswatinesstrasse 90**
**D-47800 Krefeld(DE)**
Erfinder: **Schrage, Heinrich, Dr.**
**Doerperhofstrasse 31**
**D-4780 Krefeld(DE)**

(54) **Verwendung von Benzylimidazolyl-Derivaten als Mikrobizide im Materialschutz.**

(57) Benzylimidazolyl-Derivate der Formel

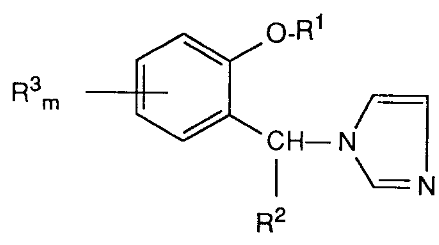

(I)

in welcher
$R^1$, $R^2$, $R^3$ und m die in der Beschreibung angegebenen Bedeutung haben sowie deren Säureadditions-Salze und Metallsalz-Komplexe lassen sich sehr gut als Mikrobizide zum Schutz von technischen Materialien verwenden.

EP 0 600 315 A1

Die vorliegende Erfindung betrifft die Verwendung von teilweise bekannten Benzylimidazolyl-Derivaten als Mikrobizide zum Schutz von technichen Materialien.

Es ist bereits bekannt, daß zahlreiche Benzylimidazol-Derivate pharmazeutische Wirksamkeit besitzen und als Antimykotika zur Bekämpfung humanpathogener Pilze eingesetzt werden können (vgl. Eur.J.Med.Chem.-Chim.Ther 14, 231-237 (1979) und DE-OS 2 418 502).

Außerdem ist bekannt, daß bestimmte [2-(Imidazol-1-yl-methyl)-phenyl]-alkyl-ether mikrobizide Eigenschaften aufweisen und im Materialschutz verwendbar sind (vgl. JP-OS 1987-16 404). So eignet sich [2-(Imidazol-1-yl-methyl)-phenyl]-(n-octyl)ether zum Schutz von nicht lebenden organischen Substraten gegen Befall durch Mikroorganismen. Die Wirksamkeit dieses Stoffes ist aber vor allem bei niedrigen Aufwandmengen nicht immer ausreichend.

Es wurde nun gefunden, daß sich Benzylimidazolyl-Derivate der Formel

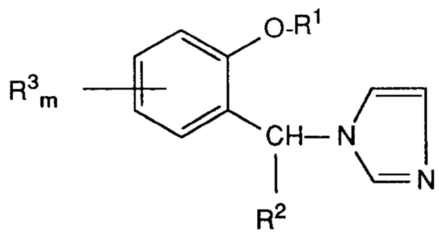

(I)

in welcher

- $R^1$ für Halogenalkyl, gegebenenfalls substituiertes Aryl, gegebenenfalls substituiertes Aralkyl, Alkenyl, Halogenalkenyl, gegebenenfalls substituiertes Aralkenyl, Alkinyl, gegebenenfalls substituiertes Aralkinyl, Alkylcarbonyl, gegebenenfalls substituiertes Arylcarbonyl oder Alkylaminocarbonyl oder Trimethylsilylalkyl steht,
- $R^2$ für Wasserstoff oder Alkyl steht,
- $R^3$ für Halogen, Alkyl, Halogenalkyl, Alkoxy, Nitro oder Cyano steht und
- m für die Zahlen 0, 1, 2 oder 3 steht,

oder

- $R^1$ für Alkyl mit 1 bis 5 oder 10 bis 20 Kohlenstoffatomen steht, und
- $R^2$ für Wasserstoff steht,

oder

- $R^1$ für Alkyl mit 1 bis 20 Kohlenstoffatomen steht, und
- $R^2$ für Alkyl mit 1 bis 6 Kohlenstoffatomen steht,

sowie deren Säureadditions-Salze und Metallsalz-Komplexe als Mikrobizide zum Schutz von technischen Materialien verwenden lassen.

Wenn der Rest $R^2$ in den Verbindungen der Formel (I) für Alkyl steht, enthalten diese Stoffe mindestens ein asymmetrisch substituiertes Kohlenstoffatom und können deshalb in den beiden optischen Isomeren-Formen anfallen. Die vorliegende Erfindung betrifft sowohl die Verwendung der Isomerengemische als auch der einzelnen Isomeren.

Überraschenderweise eignen sich die erfindungsgemäß verwendbaren Stoffe besser zur Bekämpfung von unerwünschten Mikroorganismen im Materialschutz als [2-(Imidazol-1-yl-methyl)-phenyl]-(n-octyl)-ether, welcher ein konstitutionell ähnlicher, vorbekannter Wirkstoff gleicher Wirkungsrichtung ist.

Die erfindungsgemäß verwendbaren Benzylimidazolyl-Derivate sind durch die Formel (I) allgemein definiert.

$R^1$ steht vorzugsweise für Halogenalkyl mit 1 bis 6 Kohlenstoffatomen und 1 bis 5 gleichen oder verschiedenen Halogenatomen, für Aryl mit 6 bis 10 Kohlenstoffatomen, wobei jeder dieser Arylreste einfach bis vierfach, gleichartig oder verschieden substituiert sein kann durch Halogen, Alkyl mit 1 bis 4 Kohlenstoffatomen, Alkoxy mit 1 bis 4 Kohlenstoffatomen, gegebenenfalls einfach bis dreifach durch Halogen substituiertes Phenyl, gegebenenfalls einfach bis dreifach durch Halogen substituiertes Phenoxy, gegebenenfalls einfach bis dreifach durch Halogen substituiertes Phenylalkoxy mit 1 bis 4 Kohlenstoffatomen im Alkoxyteil und/oder Cyano, oder

für Aralkyl mit 6 bis 10 Kohlenstoffatomen im Arylteil und 1 bis 4 Kohlenstoffatomen im Alkylteil, wobei jeder dieser Aralkyl-Reste einfach bis vierfach, gleichartig oder verschieden substituiert sein kann durch Halogen, Alkyl mit 1 bis 4 Kohlenstoffatomen, Alkoxy mit 1 bis 4 Kohlenstoffatomen, gegebenenfalls einfach bis dreifach durch Halogen substituiertes Phenyl, gegebenenfalls

einfach bis dreifach durch Halogen substituiertes Phenoxy, gegebenenfalls einfach bis dreifach durch Halogen substituiertes Phenylalkoxy mit 1 bis 4 Kohlenstoffatomen im Alkoxyteil und/oder Cyano, oder

für Alkenyl mit 3 bis 8 Kohlenstoffatomen, Halogenalkenyl mit 3 bis 8 Kohlenstoffatomen und 1 bis 5 gleichen oder verschiedenen Halogenatomen, für Aralkenyl mit 6 bis 10 Kohlenstoffatomen im Arylteil und 3 bis 8 Kohlenstoffatomen im Alkenylteil, wobei sowohl der Arylteil als auch der Alkenylteil jeweils einfach bis dreifach, gleichartig oder verschieden durch Halogen und/oder Alkyl mit 1 bis 4 Kohlenstoffatomen substituiert sein kann, oder

für Alkinyl mit 3 bis 8 Kohlenstoffatomen, Halogenalkinyl mit 3 bis 8 Kohlenstoffatomen und 1 bis 5 gleichen oder verschiedenen Halogenatomen, für Aralkinyl mit 6 bis 10 Kohlenstoffatomen im Arylteil und 3 bis 8 Kohlenstoffatomen im Alkinylteil, wobei der Arylteil jeweils einfach bis dreifach, gleichartig oder verschieden substituiert sein kann durch Halogen und/oder Alkyl mit 1 bis 4 Kohlenstoffatomen, oder

für Alkylcarbonyl mit 1 bis 8 Kohlenstoffatomen im Alkylteil, Arylcarbonyl mit 6 bis 10 Kohlenstoffatomen im Arylteil, wobei der Arylteil jeweils einfach bis dreifach, gleichartig oder verschieden durch Halogen und/oder Alkyl mit 1 bis 4 Kohlenstoffatomen substituiert sein kann, oder für Alkylaminocarbonyl mit 1 bis 15 Kohlenstoffatomen in der Alkylgruppe oder für Trimethylsilylmethyl.

$R^2$ steht vorzugsweise für Wasserstoff oder geradkettiges oder verzweigtes Akyl mit 1 bis 4 Kohlenstoffatomen.

$R^3$ steht vorzugsweise für Fluor, Chlor, Brom, geradkettiges oder verzweigtes Alkyl mit 1 bis 8 Kohlenstoffatomen, Halogenalkyl mit 1 bis 6 Kohlenstoffatomen und 1 bis 5 gleichen oder verschiedenen Halogenatomen, wie Fluor, Chlor und Brom, für Alkoxy mit 1 bis 4 Kohlenstoffatomen, Nitro oder Cyano.

m steht auch vorzugsweise für die Zahlen 0, 1, 2 oder 3, wobei wenn m für 2 oder 3 steht, die Reste $R^3$ gleich oder verschieden sein,

oder

$R^1$ steht für geradkettiges oder verzweigtes Alkyl mit 1 bis 5 oder 10 bis 12 Kohlenstoffatomen und,

$R^2$ für Wasserstoff ,

oder

$R^1$ steht für geradkettiges oder verzweigtes Alkyl mit 1 bis 12 Kohlenstoffatomen und,

$R^2$ für geradkettiges oder verzweigtes Alkyl mit 1 bis 4 Kohlenstoffatomen.

$R^1$ steht besonders bevorzugt für Halogenalkyl mit 1 bis 4 Kohlenstoffatomen und 1 bis 3 Fluor-, Chlor- und/oder Bromatomen, für Phenyl oder Naphthyl, wobei jeder dieser beiden Reste einfach bis dreifach, gleichartig oder verschieden substituiert sein kann durch Fluor, Chlor, Brom, Methyl, Ethyl, n-Propyl, Isopropyl, tert.-Butyl, Methoxy, Ethoxy, Cyano, gegebenenfalls einfach bis dreifach durch Fluor, Chlor und/oder Brom substituiertes Phenyl, gegebenenfalls einfach bis dreifach durch Fluor, Chlor und/oder Brom substituiertes Phenoxy und/oder gegebenenfalls einfach bis dreifach durch Fluor, Chlor und/oder Brom substituiertes Phenylalkyloxy mit 1 oder 2 Kohlenstoffatomen im Alkoxyteil, oder

für Phenylalkyl oder Naphthylalkyl mit jeweils 1 bis 3 Kohlenstoffatomen im Alkylteil, wobei jeweils der Phenyl- oder Naphthylteil einfach bis vierfach, gleichartig oder verschieden substituiert sein kann durch Fluor, Chlor, Brom, Methyl, Ethyl, n-Propyl, Isopropyl, tert.-Butyl, Methoxy, Ethoxy, Cyano, gegebenenfalls einfach bis dreifach durch Fluor, Chlor und/oder Brom substituiertes Phenyl, gegebenenfalls einfach bis dreifach durch Fluor, Chlor und/oder Brom substituiertes Phenoxy und/oder gegebenenfalls einfach bis dreifach durch Fluor, Chlor und/oder Brom substituiertes Phenylalkyloxy mit 1 oder 2 Kohlenstoffatomen im Alkoxyteil, oder

für Alkenyl mit 3 bis 6 Kohlenstoffatomen, Halogenalkenyl mit 3 bis 6 Kohlenstoffatomen und 1 bis 3 Fluor-, Chlor- und/oder Bromatomen, für Phenylalkenyl oder Naphthylalkenyl mit jeweils 3 bis 6 Kohlenstoffatomen im Alkenylteil, wobei jeweils der Phenyl- oder Naphthylteil und/oder der Alkenylteil einfach bis dreifach, gleichartig oder verschieden substituiert sein kann durch Fluor, Chlor, Brom, Methyl, Ethyl, n-Propyl, Isopropyl und/oder tert.-Butyl substituiert sein kann, oder

für Alkinyl mit 3 bis 6 Kohlenstoffatomen, Halogenalkinyl mit 3 bis 6 Kohlenstoffatomen und 1 bis 3 Fluor-, Chlor- und/oder Bromatomen, für Phenylalkinyl oder Naphthylalkinyl mit jeweils 3 bis 6 Kohlenstoffatomen im Alkinylteil, wobei jeweils der Phenyl- oder Naphthylteil einfach bis dreifach, gleichartig oder verschieden durch Fluor, Chlor, Brom, Methyl, Ethyl, n-Propyl, Isopropyl und/oder tert.-Butyl substituiert sein kann, oder

für Alkylcarbonyl mit 1 bis 6 Kohlenstoffatomen im Alkylteil, Phenylcarbonyl oder Naphthylcarbonyl, wobei jeweils der Phenyl- oder Naphthylteil einfach bis dreifach, gleichartig oder verschieden substituiert durch Fluor, Chlor, Brom, Methyl, Ethyl, n-Propyl, Isopropyl und/oder tert.-Butyl substituiert sein kann, oder

für Alkylaminocarbonyl mit 1 bis 12 Kohlenstoffatomen in der Alkylgruppe oder für Trimethylsilylmethyl.

$R^2$ steht besonders bevorzugt für Wasserstoff, Methyl, Ethyl, n-Propyl, Isopropyl, n-Butyl oder tert.-Butyl.

$R^3$ steht besonders bevorzugt für Fluor, Chlor, Brom, geradkettiges oder verzweigtes Alkyl mit 1 bis 6 Kohlenstoffatomen, Halogenalkyl mit 1 bis 4 Kohlenstoffatomen und 1 bis 3 Fluor-, Chlor- und/oder Bromatomen, für Methoxy, Ethoxy, Nitro oder Cyano.

m steht auch besonders bevorzugt für die Zahlen 0, 1, 2 oder 3,

Besonders bevorzugt sind auch Verbindungen der Formel (I), in welcher

$R^1$ für Methyl, Ethyl, n-Propyl, Isopropyl, n-Butyl, tert.-Butyl, n-Decyl oder n-Dodecyl steht,

$R^2$ für Wasserstoff steht,

$R^3$ für Fluor, Chlor, Brom, geradkettiges oder verzweigtes Alkyl mit 1 bis 6 Kohlenstoffatomen, Halogenalkyl mit 1 bis 4 Kohlenstoffatomen und 1 bis 3 Fluor-, Chlor-, und/oder Bromatomen, für Methoxy, Ethoxy, Nitro oder Cyano steht und

m für die Zahlen 0, 1, 2 oder 3 steht, oder

$R^1$ für Methyl, Ethyl, n-Propyl, Isopropyl, n-Butyl, tert.-Butyl, n-Pentyl, n-Hexyl, n-Heptyl, n-Octyl, n-Nonyl, n-Decyl oder n-Dodecyl steht, und

$R^2$ für Methyl, Ethyl, n-Propyl, Isopropyl, n-Butyl oder tert.-Butyl steht.

Bevorzugt verwendbare erfindungsgemäße Verbindungen sind auch Additionsprodukte aus Säuren und denjenigen Benzylimidazoyl-Derivaten der Formel (I), in denen $R^1$, $R^2$, $R^3$ und m diejenigen Bedeutungen haben, die für diese Substituenten und den Index als bevorzugt genannt wurden.

Zu den Säuren, die addiert werden können, gehören vorzugsweise Halogenwasserstoffsäuren, wie z.B. die Chlorwasserstoffsäure und die Bromwasserstoffsäure, insbesondere die Chlorwasserstoffsäure, ferner Phosphorsäure, Salpetersäure, mono- und bifunktionelle Carbonsäuren und Hydroxycarbonsäuren, wie z.B. Essigsäure, Maleinsäure, Bernsteinsäure, Fumarsäure und Milchsäure, sowie Sulfonsäuren, wie z.B. p-Toluolsulfonsäure und 1,5-Naphthalindisulfonsäure.

Außerdem bevorzugt verwendbare erfindungsgemäße Verbindungen sind Additionsprodukte aus Salzen von Metallen der II. bis IV. Haupt- und I. und II. sowie IV. bis VIII. Nebengruppe des Periodensystems der Elemente und denjenigen Benzylimida zolyl-Derivaten der Formel (I), in denen $R^1$, $R^2$, $R^3$ und m diejenigen Bedeutungen haben, die für diese Substituenten und diesen Index als bevorzugt genannt wurden.

Hierbei sind Salze des Kupfers, Zinks, Mangans, Magnesiums, Zinns, Eisens und des Nickels besonders bevorzugt. Als Anionen dieser Salze kommen solche in Betracht, die sich von solchen Säuren ableiten, die zu physiologisch verträglichen Additionsprodukten führen. Besonders bevorzugte derartige Säuren sind in diesem Zusammenhang die Halogenwasserstoffsäuren, wie z.B. die Chlorwasserstoffsäure und die Bromwasserstoffsäure, ferner Phosphorsäure, Salpetersäure und Schwefelsäure.

Die erfindungsgemäß verwendbaren Stoffe sind teilweise bekannt (vgl. Eur. J. Med. Chem.-Chim. Ther. 14, 231-237 (1979) und DE-OS 2 418 502). Sie lassen sich herstellen, indem man

a) in einer ersten Stufe Phenol-Derivate der Formel

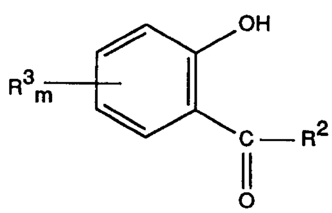

(II)

in welcher

$R^2$, $R^3$ und m die oben angegebenen Bedeutungen haben,

entweder

α) mit Halogen-Verbindungen der Formel

$R^4$-Hal (III)

in welcher

$R^4$ für Halogenalkyl, gegebenenfalls substituiertes Aralkyl, Alkenyl, Halogenalkenyl, gegebenenfalls substituiertes Aralkenyl, Alkinyl, gegebenenfalls substituiertes Aralkinyl, Alkylcarbonyl, gegebenenfalls substituiertes Arylcarbonyl oder Trimethylsilylalkyl steht und

Hal für Chlor oder Brom steht,

in Gegenwart eines Säurebindemittels, wie Natriumhydroxid, Natriumcarbonat, oder Natriumhydrid, und in Gegenwart eines inerten Verdünnungsmittels, wie Dimethylformamid, bei Temperaturen zuwischen 20 °C und 150 °C umsetzt,

oder

*β*) mit Isocyanaten der Formel

$R^5$-NCO (IV)

in welcher

$R^5$ für Alkyl steht,

in Gegenwart eines inerten Verdünnungsmittels, wie Tetrahydrofuran, und in Gegenwart einer katalytisch wirksamen Menge einer Base, wie 1,4-Diaza-bicyclo[2.2.2.]octan (DABCO), bei Temperaturen zwischen 20 °C und 150 °C umsetzt,

dann in einer zweiten Stufe die dabei entstehenden Phenyl-Derivate der Formel

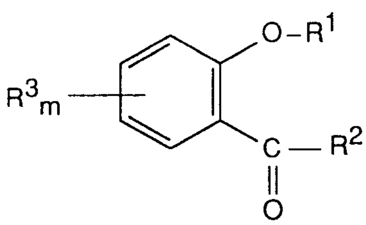

(V)

in welcher

$R^1$, $R^2$, $R^3$ und m die oben angegebenen Bedeutungen haben,

mit komplexen Hydriden, wie Natrium-borhydrid, in Gegenwart eines inerten Verdünnungsmittels, wie Methanol, bei Temperaturen zwischen 20 °C und 100 °C umsetzt, und danach

in einer dritten Stufe die dabei entstehenden Benzyl-Derivate der Formel

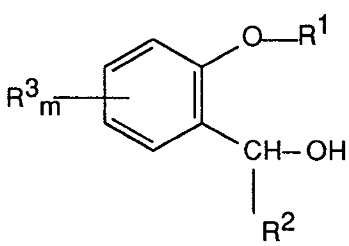

(VI)

in welcher

$R^1$, $R^2$, $R^3$ und m die oben angegebenen Bedeutungen haben,

mit Chlorierungsmitteln, wie Thionylchlorid, Sulfurylchlorid oder konzentrierter Salzsäure, in Gegenwart eines inerten Verdünnungsmittels, wie Dichlormethan, bei Temperaturen zwischen 20 °C und 100 °C umsetzt, und dann

in einer vierten Stufe die dabei entstehenden Benzylchloride der Formel

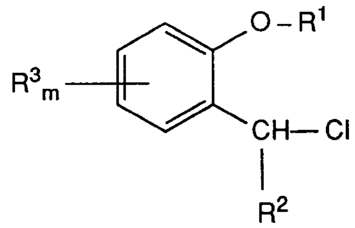 (VII)

in welcher
$R^1$, $R^2$, $R^3$ und m die oben angegebenen Bedeutungen haben,
mit Imidazol in Gegenwart eines Säurebindemittels, wie Natriumcarbonat, Triethylamin oder Natriumhydroxid, und in Gegenwart eines inerten Verdünnungsmittels, wie Dimethylformamid, bei Temperaturen zwischen 20 °C und 100 °C umsetzt,
oder
b) Benzylimidazolyl-Derivate der Formel

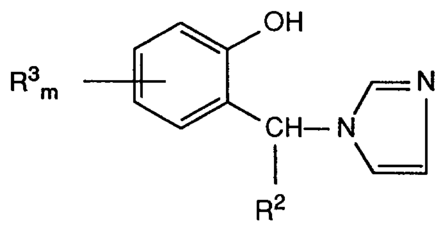 (VIII)

in welcher
$R^1$, $R^2$, $R^3$ und m die oben angegebenen Bedeutungen haben,
entweder
α) mit Halogen-Verbindungen der Formel

$R^4$-Hal (III)

in welcher
$R^4$ und Hal die oben angegebenen Bedeutungen haben,
in Gegenwart eines Säurebindemittels, wie Natriumhydroxid oder Natriumhydrid, und in Gegenwart eines inerten Verdünnungsmittels, wie Dimethylformamid, bei Temperaturen zwischen 20 °C und 150 °C umsetzt,
oder
β) mit Isocyanaten der Formel

$R^5$-NCO (IV)

in welcher
$R^5$ die oben angegebene Bedeutung hat,
in Gegenwart eines inerten Verdünnungsmittels, wie Tetrahydrofuran, und in Gegenwart einer katalytisch wirksamen Menge einer Base, wie 1,4-Diaza-bicyclo[2.2.2.]octan (DABCO), bei Temperaturen zwischen 20 °C und 150 °C umsetzt,
oder
c) Benzyl-Derivate der Formel

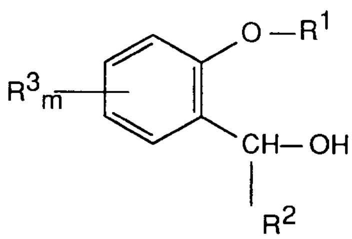

(VI)

in welcher

$R^1$, $R^2$, $R^3$ und m die oben angegebenen Bedeutungen haben,

mit Imidazol in Gegenwart von p-Toluolsulfonsäure und gegebenenfalls in Gegenwart eines inerten Vedünnungsmittels bei Temperaturen zwischen 20 °C und 150 °C umsetzt,

und gegebenenfalls anschließend an die so erhaltenen Verbindungen der Formel (I) eine Säure oder ein Metallsalz addiert.

Die bei dem obigen Verfahren (a) als Ausgangsstoffe benötigten Phenol-Derivate sind durch die Formel (II) allgemein definiert. In dieser Formel haben $R^2$, $R^3$ und m vorzugsweise diejenigen Bedeutungen, die bereits im Zusammenhang mit der Beschreibung der erfindungsgemäß verwendbaren Benzylimidazolyl-Derivate der Formel (I) vorzugsweise für diese Reste und den Index m genannt wurden.

Die Phenol-Derivate der Formel (II) sind bekannt oder lassen sich nach prinzipiell bekannten Methoden herstellen.

Die bei dem obigen Verfahren (a) als Reaktionskomponenten benötigten Halogen-Verbindungen sind durch die Formel (III) allgemein definiert. In dieser Formel steht $R^4$ vorzugsweise für diejenigen Reste, die bereits im Zusammenhang mit der Beschreibung der erfindungsgemäß verwendbaren Benzylimidazolyl-Derivate der Formel (I) vorzugsweise für den Rest $R^1$ genannt wurden, wobei jedoch die Bedeutung Alkylaminocarbonyl ausgenommen ist. Hal steht auch vorzugsweise für Chlor oder Brom.

Die Halogen-Verbindungen der Formel (III) sind bekannt oder lassen sich nach prinzipiell bekannten Methoden herstellen.

Die bei dem obigen Verfahren (a) weiterhin als Reaktionskomponenten benötigten Isocyanate sind durch die Formel (IV) allgemein definiert. In dieser Formel steht $R^5$ vorzugsweise für Alkyl mit 1 bis 15 Kohlenstoffatomen.

Die Isocyanate der Formel (IV) sind ebenfalls bekannt oder lassen sich nach prinzipiell bekannten Methoden herstellen.

Die bei dem obigen Verfahren (b) als Ausgangsstoffe benötigten Benzylimidazolyl-Derivate sind durch die Formel (VIII) allgemein definiert. In dieser Formel haben $R^2$, $R^3$ und m vorzugsweise diejenigen Bedeutungen, die bereits im Zusammenhang mit der Beschreibung der erfindungsgemäß verwendbaren Benzylimidazolyl-Derivate der Formel (I) vorzugsweise für diese Reste und den Index m genannt wurden.

Die Benzylimidazolyl-Derivate der Formel (VIII) sind bekannt oder lassen sich nach prinzipiell bekannten Methoden herstellen (vgl. Eur. J. Med. Chem.-Chim. Ther. 14, 231-237 (1979)).

Die Benzylimidazolyl-Derivate der Formel (I) können in Säureadditions-Salze und Metallsalz-Komplexe überführt werden.

Zur Herstellung von Säureadditions-Salzen der Verbindungen der Formel (I) kommen vorzugsweise diejenigen Säuren in Frage, die bereits im Zusammenhang mit der Beschreibung der erfindungsgemäß verwendbaren Säureadditions-Salze als bevorzugte Säuren genannt wurden.

Die Säureadditions-Salze der Verbindungen der Formel (I) können in einfacher Weise nach üblichen Salzbildungsmethoden, z.B. durch Lösen einer Verbindung der Formel (I) in einem geeigneten inerten Lösungsmittel und Hinzufügen der Säure, z.B. Chlorwasserstoffsäure, erhalten werden und in bekannter Weise, z.B. durch Abfiltrieren, isoliert und gegebenenfalls durch Waschen mit einem inerten organischen Lösungsmittel gereinigt werden.

Zur Herstelung von Metallsalz-Komplexen der Verbindungen der Formel (I) kommen vorzugsweise diejenigen Salze von Metallen in Frage, die bereits im Zusammenhang mit der Beschreibung der erfindungsgemäß verwendbaren Metallsalz-Komplexe als bevorzugte Metallsalze genannt wurden.

Die Metallsalz-Komplexe der Verbindungen der Formel (I) können in einfacher Weise nach üblichen Verfahren erhalten werden, so z.B. durch Lösen des Metallsalzes in Alkohol, z.B. Ethanol und Hinzufügen zu Verbindungen der Formel (I). Man kann Metallsalz-Komplexe in bekannter Weise, z.B. durch Abfiltrieren isolieren und gegebenenfalls durch Umkristallisation reinigen.

Die erfindungsgemäß verwendbaren Wirkstoffe weisen eine starke mikrobizide Wirkung auf und können zum Schutz von technischen Materialien gegen Befall und Zerstörung durch unerwünschte Mikroorganismen eingesetzt werden.

Unter technischen Materialien sind im vorliegenden Zusammenhang nicht-lebende Materialien zu verstehen, die für die Verwendung in der Technik zubereitet worden sind. Beispielsweise können technische Materialien, die durch erfindungsgemäße Wirkstoffe vor mikrobieller Veränderung oder Zerstörung geschützt werden sollen, Klebstoffe, Leime, Papier und Karton, Textilen, Leder, Holz, Anstrichmittel und Kunststoffartikel, Kühlschmierstoffe und andere Materialien sein, die von Mikroorganismen befallen oder zersetzt werden können. Im Rahmen der zu schützenden Materialien seien auch Teile von Produktionsanlagen, beispielsweise Kühlwasserkreisläufe, genannt, die durch Vermehrung von Mikroorganismen beeinträchtigt werden können. Im Rahmen der vorliegenden Erfindung seien als technische Materialien vorzugsweise Klebstoffe, Leime, Papiere und Kartone, Leder, Holz, Anstrichmittel, Kühlschmiermittel und Wärmeübertragungsflüssigkeiten genannt, besonders bevorzugt Holz.

Die erfindungsgemäß verwendbaren Stoffe eignen sich vorzugsweise zum Schutz von Anstrichen gegen Befall und Zerstörung durch Mikroorganismen.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemäß verwendbaren Wirkstoffe gegen Pilze, insbesondere Schimmelpilze, holzverfärbende und holzzerstörende Pilze (Basidiomyceten) sowie gegen Schleimorganismen und Algen.

Es seien beispielsweise Mikroorganismen der folgenden Gattungen genannt:
Alternaria, wie Alternaria tenuis,
Aspergillus, wie Aspergillus niger,
Chaetomium, wie Chaetomium globosum,
Coniophora, wie Coniophora puetana,
Lentinus, wie Lentinus tigrinus,
Penicillium, wie Penicillium glaucum,
Polyporus, wie Polyporus versicolor,
Aureobasidium, wie Aureobasidium pullulans,
Sclerophoma, wie Sclerophoma pityophila,
Trichoderma, wie Trichoderma viride,
Escherichia, wie Escherichia coli,
Pseudomonas, wie Pseudomonas aeruginosa,
Staphylococcus, wie Staphylococcus aureus.

Je nach Anwendungsgebiet können die erfindungsgemäß zu verwendenden Wirkstoffe in die üblichen Formulierungen überführt werden, wie Lösungen, Emulsionen, Suspensionen, Pulver, Pasten und Granulate.

Diese können in an sich bekannter Weise hergestellt werden, z.B. durch Vermischen der Wirkstoffe mit einem Streckmittel, das aus flüssigem Lösungsmittel und/oder festen Trägerstoffen besteht, gegebenenfalls unter Verwendung von oberflächenaktiven Mitteln, wie Emulgatoren und/oder Dispergiermitteln, wobei gegebenenfalls im Falle der Benutzung von Wasser als Streckmittel organische Lösungsmittel wie Alkohole als Hilfsmittel verwendet werden können.

Flüssige Lösungsmittel für die Wirkstoffe können beispielsweise Wasser, Alkohole, vorzugsweise Ethanol oder Isopropanol, oder Benzylalkohol, Ketone wie Aceton oder Methylethylketon, flüssige Kohlenwasserstoffe wie Benzinfraktionen, halogenierte Kohlenwasserstoffe wie 1,2-Dichlorethan sein.

Die zum Schutz technischer Materialien verwendeten Mittel enthalten die Wirkstoffe im allgemeinen in einer Menge von 1 bis 95 Gew.-%, bevorzugt von 10 bis 75 Gew.-%.

Die Anwendungskonzentrationen der erfindungsgemäß zu verwendenden Wirkstoffe richten sich nach der Art und dem Vorkommen der zu bekämpfenden Mikroorganismen sowie nach der Zusammensetzung des zu schützenden Materials. Die optimale Einsatzmenge kann durch Testreihen ermittelt werden. Im allgemeinen liegen die Anwendungskonzentrationen im Bereich von 0,001 bis 5 Gew.-%, vorzugsweise von 0,05 bis 1,0 Gew.-%, bezogen auf das zu schützende Material.

Die Wirksamkeit und das Wirkungsspektrum der erfindungsgemäß verwendbaren Wirkstoffe bzw. der daraus herstellbaren Mittel, Konzentrate oder ganz allgemein Formulierungen kann erhöht werden, wenn gegebenenfalls weitere antimikrobiell wirksame Verbindungen, Fungizide, Bakterizide, Herbizide, Insektizide oder andere Wirkstoffe zur Vergrößerung des Wirkungsspektrums oder Erzielung besonderer Effekte wie z.B. dem zusätzlichen Schutz vor Insekten zugesetzt werden. Diese Mischungen können ein breiteres Wirkungsspektrum besitzen als die erfindungsgemäßen Verbindungen.

In vielen Fällen erhält man dabei synergistische Effekte, d.h. die Wirksamkeit der Mischung ist größer als die Wirksamkeit der Einzelkomponenten. Besonders günstige Mischungspartner sind z.B. die folgenden

Verbindungen:
Sulfenamide wie Dichlorfluanid (Eurparen), Tolylfluanid (Methyleuparen), Folpet, Fluorfolpet;
Benzimidazole wie Carbendazim (MBC), Benomyl, Fuberidazole, Thiabendazole oder deren Salze;
Thiocyanate wie Thiocyanatomethylthiobenzothiazol (TCMTB), Methylenbisthiocyanat (MBT);
quartäre Ammoniumverbindungen wie Benzyldimethyltetradecylammoniumchlorid, Benzyl-dimethyl-dodecyl-ammoniumchlorid, Dodecyl-dimethyl-ammoniumchlorid;
Morpholinderivate wie $C_{11}$-$C_{14}$-4-Alkyl-2,6-dimethylmorpholin-homologe(Tridemorph), (±)-cis-4-[3-tert.-Butylphenyl)-2-methylpropyl]-2,6-dimethylmorpholin (Fenpropimorph), Falimorph;
Phenole wie o-Phenylphenol, Tribromphenol, Tetrachlorphenol, Pentachlorphenol, 3-Methyl-4-chlorphenol, Dichlorophen, Chlorophen oder deren Salze;
Azole wie Triadimefon, Triadimenol, Bitertanol, Tebuconazole, Propiconazole, Azaconazole, Hexaconazole, Prochloraz, Cyproconazole, 1-(2-Chlorphenyl)-2-(1-chlorcyclopropyl)-3-(1,2,4-triazol-1-yl)-propan-2-ol und 1-(2-Chlorphenyl)-2-(1,2,4-triazol-1-yl-methyl)-3,3-dimethyl-butan-2-ol.

Iodpropargylderivate wie Iodpropargyl-butylcarbamat (IPBC), -chlorophenylformal, -phenylcarbamat, -hexylcarbamat, -cyclohexylcarbamat, Iodpropargyloxyethylphenylcarbamat;
Iodderivate wie Diiodmethyl-p-arylsulfone z.B. Diodmethyl-p-tolylsulfon;
Bromderivate wie Bromopol;
Isothiazolinone wie N-Methylisothiazolin-3-on, 5-Chloro-N-methylisothiazolin-3-on, 4,5-Dichlor-N-octylisothiazolin-3-on, N-Octylisothiazolin-3-on (Octilinone);
Benzisothiazolinone, Cyclopentenisothiazolinone;
Pyridine wie 1-Hydroxy-2-pyridinthion (und ihre Na-, Fe-, Mn, Zn-Salze), Tetrachlor-4-methylsulfphonylpyridin;
Metallseifen wie Zinn-, Kupfer-, Zink-naphthenat, -octoat, -2-ethylhexanoat, -oleat, -phosphat, -benzoat, Oxide wie TBTO, $Cu_2O$, CuO, ZnO;
Organische Zinnverbindungen wie Tributylzinn-naphthenat und Tributylzinnoxid;
Dialkyldithiocarbamate wie Na- und Zn-Salze von Dialkyldithiocarbamaten, Tetramethyltiuramdisulfid (TMTD);
Nitrile wie 2,4,5,6-Tetrachlorisophthalonitril (Chlorothalonil) u.a Mikrobizide mit aktivierter Halogengruppe wie Cl-Ac, MCA, Tectamer, Bromopol, Bromidox;
Benzthiazole wie 2-Mercaptobenzothiazol; so. Dazomet;
Chinoline wie 8-Hydroxychinolin;
Formaldehydabspaltende Verbindungen wie Benzylalkoholmono(poly)hemiformal, Oxazolidine, Hexahydro-s-triazine, N-Methylolchloracetamid;
Tris-N-(Cyclohexyldiazeniumdioxy)-Aluminium N-(Cyclohexyldiazeniumdioxy)-Tributylzinn bzw. K-Salze, Bis-(N-cyclohexyl)diazinium (-dioxy- Kupfer oder Aluminium).

Als Insektizide werden bevorzugt zugesetzt:
Phosphorsäureester wie Azinphos-ethyl, Azinphos-methyl, 1-(4-Chlorphenyl)-4-(O-ethyl, S-propyl)-phosphoryloxypyrazol (TIA-230), Chlorpyrifos, Coumaphos, Demeton, Demeton-S-methyl, Diazinon, Dichlorvos, Dimethoate, Ethoprophos, Etrimfos, Fenitrothion, Fenthion, Heptenophos, Parathion, Parathion-methyl, Phosalone, Phoxim, Pirimiphos-ethyl, Pirimiphos-methyl, Profenofos, Prothiofos, Sulfprofos, Triazophos und Trichlorphon;
Carbamate wie Aldicarb, Bendiocarb, BPMC (2-(1-Methylpropyl)phenylmethylcarbamat), Butocarboxim, Butoxicarboxim, Darbaryl, Carbofuran, Carbosulfan, Cloethocarb, Isoprocarb, Methomyl, Oxamyl, Pirimicarb, Promecarb, Propoxur und Thiodicarb;
Pyrethroide wie Allethrin, Alphamethrin, Bioresmethrin, Byfenthrin (FMC 54 800), Cycloprothrin, Cyfluthrin, Decamethrin, Cyhalothrin, Cypermethrin, Deltamethrin, Alpha-cyano-3-phenyl-2-methylbenzyl-2,2-dimethyl-3-(2-chlor-2-trifluormethylvin yl)cyclopropancarboxylat, Fenpropathrin, Fenfluthrin, Fenvalerate, Flucythrinate, Flumethrin, Fluvalinate, Permethrin und Resmethrin;
Nitroimino und Nitromethylene wie 1-[(6-Chlor-3-pyridinyl)-methyl]-4,5-dihydro-N-nitro-1H-imidazol-2-amin (Imidacloprid).

Organosiliciumverbindungen, vorzugsweise Dimethyl(phenyl)silylmethyl-3-phenoxy-benzylether wie z.B. Dimethyl-(4-ethoxyphenyl)-silylmethyl-3-phenoxybenzylether oder Dimethyl(phenyl)-silylmethyl-2-phenoxy-6-pyridylmethylether wie z.B. Dimethyl(9-ethoxyphenyl)-silylmethyl-2-phenoxy-6-pyridlmethyl-ether oder (Phenyl)[3-(3-phenoxyphenyl)propyl](dimethyl)-silane wie z.B. (4-ethoxyphenyl-[3(4-fluoro-3-phenoxyphenyl)-propyl]dimethyl-silan.

Als andere Wirkstoffe kommen auch in Betracht Algizide, Molluskizide, Wirkstoffe gegen "sea animals", die sich auf z.B. Schiffsbodenanstrichen ansiedeln.

Die Herstellung von Wirkstoffen und deren erfindungsgemäße Verwendung werden durch die folgenden Beispiele veranschaulicht.

Herstellungsbeispiele

Beispiel 1

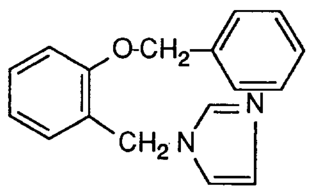

(I-1)

In ein Gemisch aus 207 g (2,3 Mol) Imidazol-Natrium und 1,7 Litern absolutem Dimethylformamid werden bei Raumtemperatur unter Rühren 478 g (2,06 Mol) 1-Benzyloxy-2-chlormethyl-benzol gegeben, wobei die Temperatur des Reaktionsgemisches auf 90 °C ansteigt. Das Reaktionsgemisch wird 2 Stunden bei 80 °C nachgerührt und dann durch Abziehen des Lösungsmittels unter vermindertem Druck eingeengt. Der verbleibende ölige Rückstand wird dreimal mit Wasser gewaschen, dann in Dichlormethan aufgenommen und erneut mit Wasser gewaschen. Die organische Phase wird über Natriumsulfat getrocknet und durch Abziehen des Lösungsmittels unter vermindertem Druck eingeengt. Der verbleibende ölige Rückstand wird über Kieselgel filtriert (Gradient: Toluol→Essigester). Nach dem Einengen des Eluates erhält man 438 g (80 % der Theorie) an 1-Imidazolylmethyl-2-benzyloxybenzol in Form einer Festsubstanz vom Schmelzpunkt 64 °C.

Herstellung von Ausgangssubstanzen:

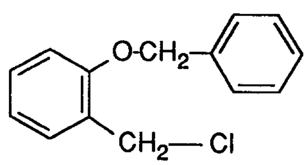

(VII-1)

In 150 ml konzentrierte Salzsäure werden unter Rühren bei Raumtemperatur 56 g (0,25 Mol) 1-Benzyloxy-2-hydroxy-methylbenzol eingegossen. Die entstehende Suspension, die sich durch exotherme Reaktion etwas erwärmt, wird 30 Minuten nachgerührt und dann mit Dichlormethan extrahiert. Die organische Phase wird mit Wasser gewaschen und nach dem Trocknen über Natriumsulfat durch Abziehen des Lösungsmittels unter vermindertem Druck eingeengt. Der verbleibende Rückstand wird mit Toluol/Cyclohexan = 1:1 an Kieselgel chromatographiert. Nach dem Einengen des Eluates erhält man 41,6 g (71,5 % der Theorie) an 1-Benzyloxy-2-chlormethylbenzol in Form eines Öles.

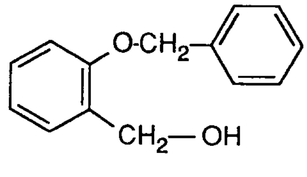

(VI-1)

In ein Gemisch aus 65,5 g (0,31 Mol) 2-Benzyloxybenzaldehyd in 300 ml absolutem Methanol werden bei Raumtemperatur unter Stickstoffatmosphäre und unter Rühren 9,4 g (0,24 Mol) Natriumborhydrid gegeben. Das Reaktionsgemisch wird eine Stunde bei Raumtemperatur nachgerührt, dann 2 Stunden unter Rückfluß erhitzt und danach durch Abziehen des Lösungsmittels unter vermindertem Druck eingeengt. Der verbleibende Rückstand wird mit verdünnter Schwefelsäure digeriert. Man extrahiert mit Dichlormethan und wäscht die organische Phase mit Wasser. Nach dem Trocknen über Natriumsulfat wird die organische Phase durch Abziehen des Lösungsmittels eingeengt. Man erhält auf diese Weise 62,4 g (94 % der Theorie) an 1-Benzyloxy-2-hydroxymethylbenzol in Form eines gelben Öles.

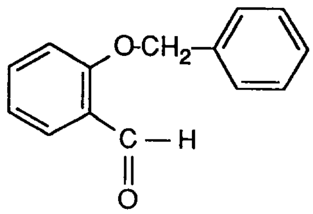

(V-1)

Bei Raumtemperatur werden 7,2 g (0,24 Mol) Natriumhydrid (80 %-ig) unter Rühren und unter Stickstoffatmosphäre in eine Lösung von 24,4 g (0,2 Mol) Salicylaldehyd in 200 ml absolutem Dimethylformamid gegeben, wobei sich das Reaktionsgemisch unter Gasentwicklung schwach exotherm erwärmt. Man rührt noch eine Stunde bei Raumtemperatur nach, tropft dann 27,8 g (0,22 Mol) Benzylchlorid hinzu und rührt weitere 16 Stunden bei Raumtemperatur. Nach Zugabe von 5 ml Essigester wird das Reaktionsgemisch auf 700 ml Eiswasser gegeben. Das sich abscheidende Öl wird abgetrennt und in Dichlormethan aufgenommen. Die organische Phase wird mit Wasser gewaschen und nach dem Trocknen über Natriumsulfat durch Abziehen des Lösungsmittels unter vermindertem Druck eingeengt. Der verbleibende Rückstand wird mit Toluol an Kieselgel chromatographiert. Nach dem Einengen des Eluates erhält man 38 g (90 % der Theorie) an 2-Benzyloxybenzaldehyd in Form eines gelben Öles.

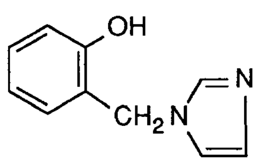

(VIII-1)

Ein Gemisch aus 418 g (1,6 Mol) 1-Imidazolylmethyl-2-benzyloxybenzol und 1,5 Litern absolutem Ethanol wird bei Raumtemperatur mit 50 g Palladium (Norit-B-Supra, 10 %ig), das mit trockenem Ethanol wasserfrei gewaschen wurde, versetzt. Man hydriert im Autoklaven bei 50 °C unter einem Wasserstoffdruck von 35 bar über einen Zeitraum von 6 Stunden. Anschließend wird der Palladium-Katalysator abgetrennt und mehrfach mit Methanol ausgekocht. Beim Abkühlen der vereinigten Methanolphasen scheiden sich 87,4 g an 2-Imidazolyl-methylphenyl in fester Form ab. Die methanolische Mutterlauge und die Ethanol-Phase werden vereinigt und unter verminderten Druck eingeengt, wobei sich weitere 154,6 g an Feststoff abscheiden.
Man erhält auf diese Weise insgesamt 242 g (88 % der Theorie) an 2-Imidazolylmethyl-phenol in Form einer Festsubstanz vom Schmelzpunkt 158-159 °C.

Nach der im Beispiel 1 angegebenen Methode werden auch die in der folgenden Tabelle 1 aufgeführten Verbindungen der Formel (I) hergestellt.

Tabelle 1

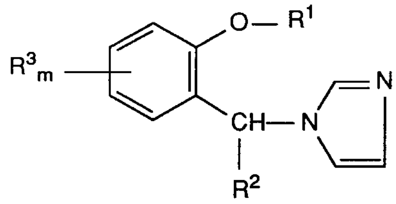

(I)

| Beispiel Nr. | Verbind. Nr. | $R^1$ | $R^2$ | $R^3{}_m$ | Schmelzpunkt [°C] |
|---|---|---|---|---|---|
| 2 | I-2 | $-CH_2-CH=CH_2$ | H | - | Öl |
| 3 | I-3 | 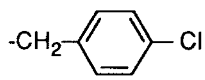 | H | - | 87 |
| 4 | I-4 | 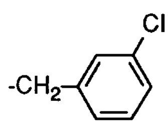 | H | - | Öl |
| 5 | I-5 | 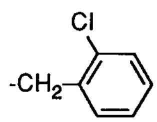 | H | - | 90 |
| 6 | I-6 | 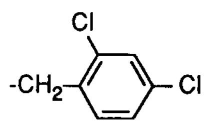 | H | _ | 110 |
| 7 | I-7 | 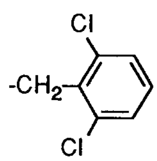 | H | - | 114 |
| 8 | I-8 | 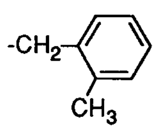 | H | - | 62 |
| 9 | I-9 | 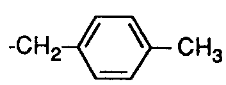 | H | - | 85 |

Tabelle 1 (Fortsetzung)

| Beispiel Nr. | Verbind. Nr. | $R^1$ | $R^2$ | $R^3_m$ | Schmelzpunkt [°C] |
|---|---|---|---|---|---|
| 10 | I-10 | 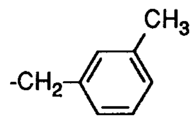 | H | - | 60 |
| 11 | I-11 | 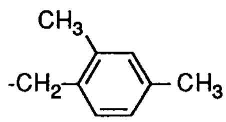 | H | - | Öl |
| 12 | I-12 | 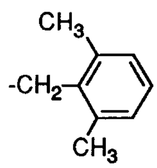 | H | - | 59 |
| 13 | I-13 | 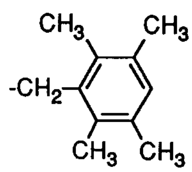 | H | - | 148 |
| 14 | I-14 | 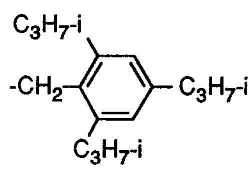 | H | – | 92 |
| 15 | I-15 | 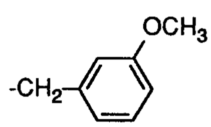 | H | - | 61 |
| 16 | I-16 | 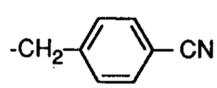 | H | - | 113 |

Tabelle 1 (Fortsetzung)

| Beispiel Nr. | Verbind. Nr. | $R^1$ | $R^2$ | $R^3_m$ | Schmelzpunkt [°C] |
|---|---|---|---|---|---|
| 17 | I-17 | 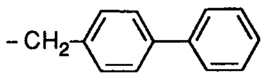 | H | - | 124 |
| 18 | i-18 | 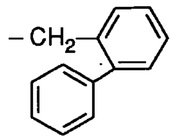 | H | - | 75 |
| 19 | I-19 | 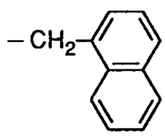 | H | - | 89 |
| 20 | I-20 | 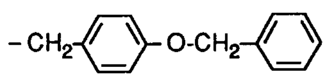 | H | _ | 121 |
| 21 | I-21 | 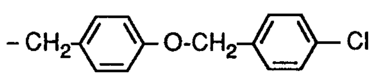 | H | _ | 103 |
| 22 | I-22 | 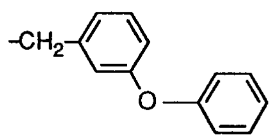 | H | _ | 65 |
| 23 | I-23 | 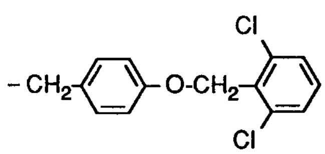 | H | - | 94 |

Tabelle 1 (Fortsetzung)

| Beispiel Nr. | Verbind. Nr. | $R^1$ | $R^2$ | $R^3{}_m$ | Schmelzpunkt [°C] |
|---|---|---|---|---|---|
| 24 | I-24 | 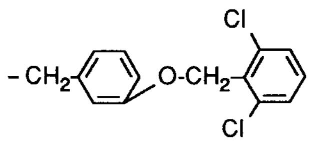 | H | - | 100 |
| 25 | I-25 | 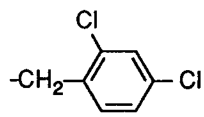 | H | 4-Cl | 133 |
| 26 | I-26 | 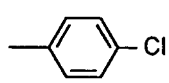 | H | $4-CH_3$ | 89 |
| 27 | I-27 | 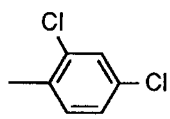 | H | $4-CH_3$ | 107-108 |
| 28 | I-28 | 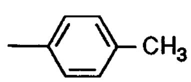 | H | $4-CH_3$ | 49.5-56,5 |

Beispiel 29

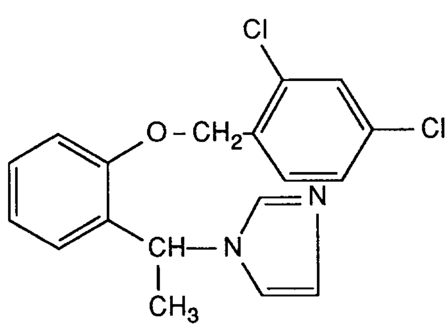

(I-29)

(Verfahren b)

In ein Gemisch aus 5 g (0,24 Mol) 2-(1-Imidazolylethyl)-phenol-Natriumsalz in 50 ml absolutem Dimethylformamid werden bei Raumtemperatur unter Rühren 5,1 g (0,26 Mol) 2,4-Dichlorbenzylchlorid eingetropft. Nach beendeter Zugabe wird noch 5 Stunden unter Rühren auf 80 °C erhitzt. Dann wird das

Reaktionsgemisch durch Abziehen des Lösungsmittels unter vermindertem Druck eingeengt. Der verbleibende Rückstand wird mit Toluol/Essigester 1:1 an Kieselgel chromatographiert. Nach dem Einengen des Eluates erhält man 6,7 g (80 % der Theorie) an 1'-Imidazolylethyl-2-(2',4'-dichlorbenzyloxy)-benzol in Form farbloser Kristalle vom Schmelzpunkt 79-80 °C.

Verfahren c)

Ein Gemisch aus 14,9 g (0,05 Mol) 1'-Hydroxy-ethyl-2-(2',4'-dichlorbenzyloxy)-benzol, 7 g p-Toluolsulfonsäure und 13,8 g (0,2 Mol) Imidazol wird unter Rühren über einen Zeitraum von 2 Stunden auf 190 °C erhitzt. Nach dem Abkühlen auf Raumtemperatur wird das Reaktionsgemisch mit Wasser versetzt. Das sich abscheidende Öl wird abgetrennt und durch zweimalige Säulenchromatographie an Kieselgel mit Toluol→Essigester (1. Gradient) und Toluol/Essigester = 1:1 (2. Gradient) gereinigt. Man erhält auf diese Weise 8,5 g (51 % der Theorie) an 1'-Imidazolylethyl-2-(2'-4'-dichlorbenzyloxy)-benzol in Form farbloser Kristalle vom Schmelzpunkt 79-80 °C.

Herstellung von Ausgangssubstanzen:

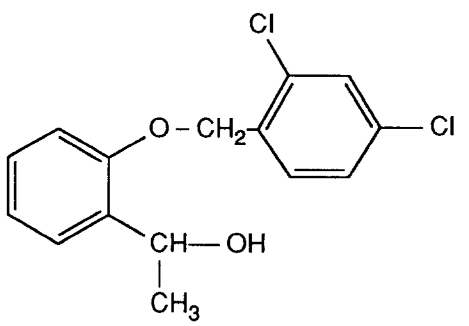

(VI-2)

In ein Gemisch aus 44,2 g (0,15 Mol) 2-(2'-4'-Dichlorbenzyloxy)-acetophenon in 150 ml Methanol werden unter Stickstoffatmosphäre und unter Rühren bei Raumtemperatur 4,2 g (0,113 Mol) Natriumborhydrid gegeben, wobei sich Gas entwickelt und das Reaktionsgemisch sich etwas erwärmt. Nach zweistündigem Rühren bei Raumtemperatur wird das Reaktionsgemisch unter vermindertem Druck eingeengt. Man verrührt den verbleibenen Rückstand mit verdünnter Schwefelsäure und extrahiert mit Dichlormethan. Die organische Phase wird mit Wasser gewaschen und nach dem Trocknen über Natriumsulfat durch Abziehen des Lösungsmittels unter vermindertem Druck eingeengt. Man erhält auf diese Weise 42,8 g (96 % der Theorie) an 1'-Hydroxyethyl-2-(2',4'-dichlorbenzyloxy)-benzol in Form einer Festsubstanz vom Schmelzpunkt 83-84,5 °C.

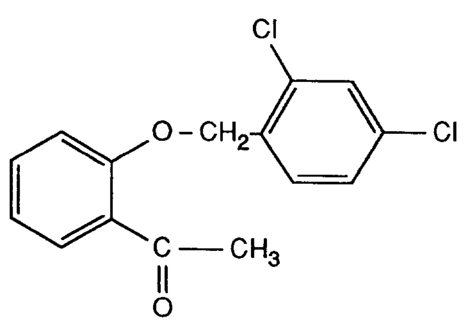

(V-2)

Ein Gemisch aus 31,6 g (0,2 Mol) 2-Hydroxy-acetophenon-Natriumsalz und 100 ml absolutem Dimethylformamid wird bei Raumtemperatur unter Rühren mit 40,2 g (0,2 Mol) 2,4-Dichlorbenzylchlorid versetzt. Nach beendeter Zugabe wird das Reaktionsgemisch noch 16 Stunden bei Raumtemperatur gerührt und dann in 1,5 Liter Eiswasser eingerührt. Der ausgefallene Niederschlag wird abgesaugt, mit Wasser gewaschen und getrocknet. Zur weiteren Reinigung wird das Produkt mit 100 ml Isopropanol intensiv verrührt, abgesaugt und erneut getrocknet. Man erhält auf diese Weise 47,4g (80 % der Theorie) an 2-(2',4'-Dichlorbenzyloxy)-acetophenon in Form einer Festsubstanz vom Schmelzpunkt 82-84 ° C.

Nach den im Beispiel 29 angegebenen Methoden werden auch die in der folgenden Tabelle 2 aufgeführten Verbindungen der Formel (I) hergestellt.

Tabelle 2

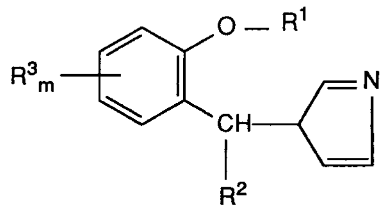

(I)

| Beispiel Nr. | Verbind. Nr. | $R^1$ | $R^2$ | $R^3_m$ | Schmelzpunkt [°C] |
|---|---|---|---|---|---|
| 30 | I-30 | $-CH_2-Si(CH_3)_3$ | $CH_3$ | - | 75 |
| 31 | I-31 | $-CH_2-C\equiv CH$ | $CH_3$ | - | Öl |
| 32 | I-32 | $-CH_2-CH=CH-$ 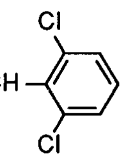 | $CH_3$ | - | Öl |
| 33 | I-33 | $-CH_2-CH=CH-$ 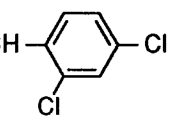 | $CH_3$ | – | Harz |
| 34 | I-34 | $-CH_2-CH=CH-$ 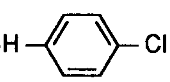 | $CH_3$ | - | 84 |
| 35 | I-35 | $-CH_2-CH=C-$ 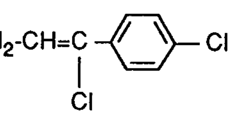 | $CH_3$ | - | 83 |
| 36 | I-36 | $-CH_2-$ 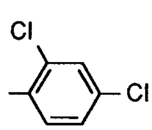 | $CH_3$ | 4-F | 88 |

Tabelle 2 (Fortsetzung)

| Beispiel Nr. | Verbind. Nr. | $R^1$ | $R^2$ | $R^3{}_m$ | Schmelzpunkt [°C] |
|---|---|---|---|---|---|
| 37 | I-37 | 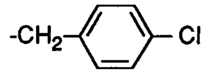 | $CH_3$ | 4-F | 128 |
| 38 | I-38 | 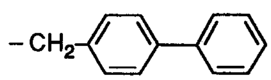 | $CH_3$ | 4-F | 112 |
| 39 | I-39 | 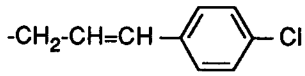 | $CH_3$ | 4-F | 119 |

Beispiel 40

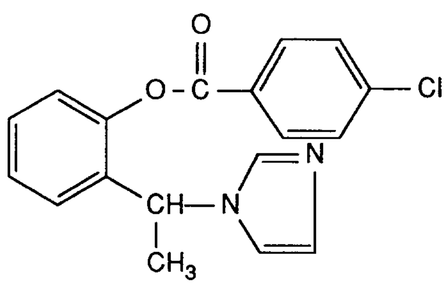

(I-40)

In eine Lösung von 7,5 g (0,04 Mol) 2-(1-Imidazolylethyl)-phenol in 75 ml Tetrahydrofuran werden bei Raumtemperatur unter Rühren 7,0 g (0,05 Mol) 4-Chlorbenzoylchlorid und 5,1 g (0,05 Mol) Triethylamin eingetropft. Man rührt nach beendeter Zugabe noch 16 Stunden bei Raumtemperatur, saugt dann den ausgefallenen Feststoff ab und engt das Filtrat durch Abziehen des Lösunsmittels unter vermindertem Druck ein. Der verbleibende Rückstand wird in 200 ml Dichlormethan aufgenommen. Die entstehende Lösung wird zweimal mit je 100 ml Wasser gewaschen, über Natriumsulfat getrocknet und durch Abziehen des Lösungsmittels unter vermindertem Druck eingeengt. Der verbleibende ölige Rückstand wird mit Toluol→Toluol/Essigester = 3:1 an Kieselgel chromatographiert. Nach dem Einengen des Eluates erhält man 8,2 g (62,8 % der Theorie) an 1'-Imidazolylethyl-2-(4'-chlorbenzoyloxy)-benzol in Form einer kristallinen Festsubstanz vom Schmelzpunkt 81-83 °C.

Nach der im Beispiel 40 angegebenen Methode werden auch die in der folgenden Tabelle 3 aufgeführten Verbindungen der Formel (I) hergestellt.

Tabelle 3

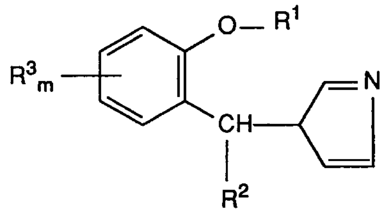 (I)

| Beispiel Nr. | Verbind. Nr. | $R^1$ | $R^2$ | $R^3{}_m$ | Schmelzpunkt [°C] |
|---|---|---|---|---|---|
| 41 | I-41 | $-CO-C_2H_5$ | $CH_3$ | - | Öl |
| 42 | I-42 | $-CO-CH_2-C_3H_7-i$ | $CH_3$ | - | Öl |
| 43 | I-43 | $-CO-CH_2-C_4H_9-t$ | $CH_3$ | - | 125 |
| 44 | I-44 | 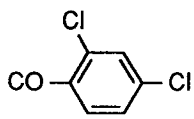 | $CH_3$ | - | Öl |
| 45 | I-45 | 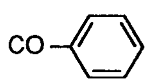 | $CH_3$ | - | Öl |
| 46 | I-46 | 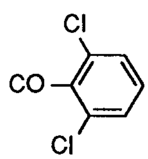 | $CH_3$ | - | 51 |

Beispiel 47

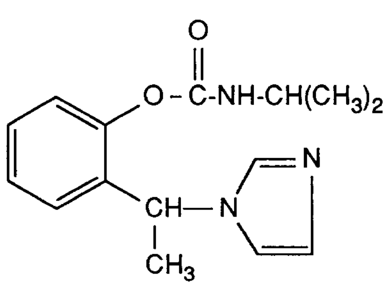 (I-47)

In ein Gemisch aus 9,4 g (0,05 Mol) 2-(1-Imidazolylethyl)-phenol 100 ml absolutem Tetrahydrofuran und einer katalytischen Menge an 1,4-Diaza-bicyclo[2.2.2]octan (DABCO) werden bei Raumtemperatur unter Rühren 4,7 g (0,055 Mol) Isopropylisocyanat eingetropft. Nach beendeter Zugabe wird das Reaktionsgemisch 16 Stunden unter Rückfluß erhitzt und dann durch Abziehen des Lösungsmittels unter vermindertem

Druck eingeengt. Der verbleibende Rückstand wird in Dichlormethan aufgenommen. Die organische Phase wird mit Wasser gewaschen und nach dem Trocknen über Natriumsulfat durch Abziehen des Lösungsmittels unter vermindertem Druck eingeengt. Der verbleibende Rückstand wird mit Essigester an Kieselgel chromatographiert. Nach dem Einengen des Eluates erhält man 11,2 g (82,1 % der Theorie) an 1'-Imidazolylethyl-2-isopropylamidocarbonyloxybenzol in Form einer kristallinen Festsubstanz vom Schmelzpunkt 154 °C.

Nach der in Beispiel 47 angegebenen Methode werden auch die in der folgenden Tabelle 4 aufgeführten Verbindungen der Formel (I) hergestellt.

Tabelle 4

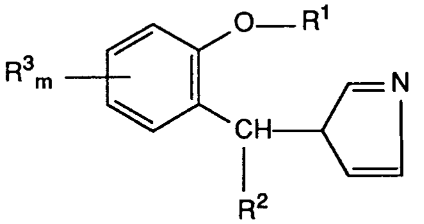

(I)

| Beispiel Nr. | Verbind. Nr. | $R^1$ | $R^2$ | $R^3_m$ | Schmelzpunkt [°C] |
|---|---|---|---|---|---|
| 48 | I-48 | $-\underset{\underset{O}{\|}}{C}-NH-C_4H_9\text{-n}$ | $CH_3$ | - | 139 |
| 49 | I-49 | $-\underset{\underset{O}{\|}}{C}-NH-C_{12}H_{25}$ | $CH_3$ | - | 158 |
| 50 | I-50 | $-\underset{\underset{O}{\|}}{C}-NH-CH_3$ | $CH_3$ | - | 147 |

Herstellung weiterer Ausgangssubstanzen

Beispiel 51

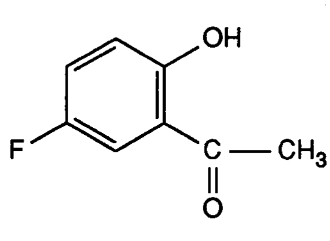

(II-1)

53,7 g (0,35 Mol) Essigsäure-4-fluorphenylester werden bei 60 °C über 1,25 Stunden mit 126 g Aluminiumchlorid versetzt, wobei die Temperatur des Reaktionsgemisches auf etwa 115 °C ansteigt. Das Reaktionsgemisch wird weitere 4 Stunden bei 115 °C nachgerührt, dann auf Raumtemperatur abgekühlt und in 2 Liter Eiswasser eingerührt. Man säuert durch Zugabe von Salzsäure an und rührt 1,5 Stunden nach.

Der ausgefallene Feststoff wird abgesaugt und getrocknet. Man erhält auf diese Weise 46,2 g (86 % der Theorie) an 2-Hydroxy-5-fluor-acetophenon in Form einer Festsubstanz vom Schmelzpunkt 54 °C.

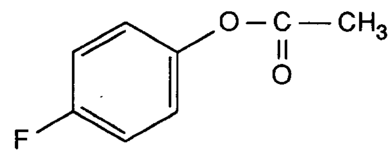

Ein Gemisch aus 47,2 g (0,42 Mol) 4-Fluorphenol und 42,9 g (0,42 Mol) Acetanhydrid wird bei Raumtemperatur unter Rühren mit 0,5 ml konzentrierter Schwefelsäure versetzt, wobei sich das Reaktionsgemisch auf etwa 80 °C erwärmt. Man rührt das Reaktionsgemisch weitere 2 Stunden bei 80 °C, gibt es dann auf Eiswasser und extrahiert mit Dichlormethan. Die organische Phase wird mit wäßriger Natriumhydrogencarbonat-Lösung gewaschen, über Natriumsulfat getrocknet und durch Abziehen des Lösungsmittels unter vermindertem Druck eingeengt. Der verbleibende Rückstand wird unter vermindertem Druck destilliert. Man erhält auf diese Weise 53,8 g (82,9 % der Theorie) an Essigsäure-4-fluorphenylester in Form einer Flüssigkeit vom Siedepunkt 84 °C/20 Torr.

Nach den zuvor angegebenen Methoden werden auch die in der folgenden Tabelle 5 aufgeführten Stoffe hergestellt.

Tabelle 5

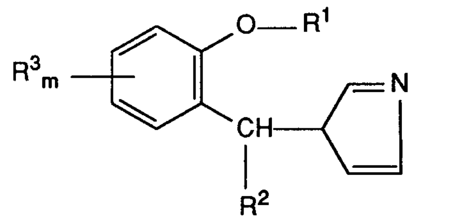

(I)

| Beispiel Nr. | Verbind. Nr. | $R^1$ | $R^2$ | $R^3_m$ | Schmelzpunkt [°C] |
|---|---|---|---|---|---|
| 52 | I-52 | 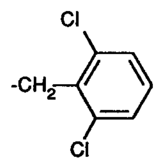 | H | 4-$CH_3$ | 104-108 |
| 53 | I-53 | 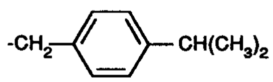 | H | 4-$CH_3$ | 60-70 |
| 54 | I-54 | 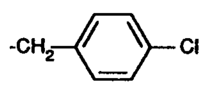 | H | 4-$C_2H_5$ | 60-62 |
| 55 | I-55 | 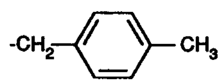 | H | 4-$C_2H_5$ | 56,5-58 |
| 56 | I-56 | 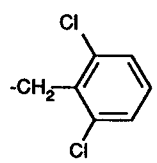 | H | 4-$C_2H_5$ | 74-77 |
| 57 | I-57 | 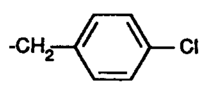 | H | 4-$C_3H_7$-i | 90-93 |
| 58 | I-58 | 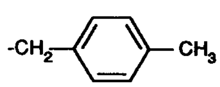 | H | 4-$C_3H_7$-i | 87 |

Tabelle 5 (Fortsetzung)

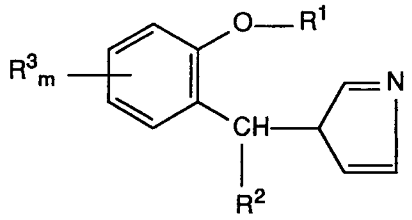

(I)

| Beispiel Nr. | Verbind. Nr. | $R^1$ | $R^2$ | $R^3_m$ | Schmelzpunkt [°C] |
| --- | --- | --- | --- | --- | --- |
| 59 | I-59 | 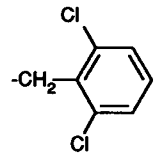 | H | 4-$C_3H_7$-I | 88-97 |
| 60 | I-60 | 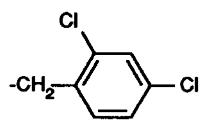 | H | 4-$C_2H_5$ | 112-114 |
| 61 | I-61 | 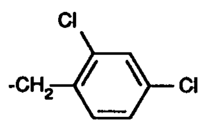 | H | 4-$C_3H_7$-I | 107-110 |

**Beispiel 62**

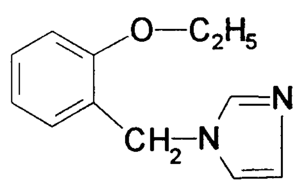

(I-62)

Zu einer Lösung von 6,3 g (0,037 mol) 2-Ethoxybenzylchlorid in 25 ml Dimethylformamid werden 3,3 g (0,037 mol) Natriumimidazolid, gelöst in 10 ml Dimethylformamid, zugefügt. Die Reaktionsmischung wird 6 Stunden bei 60 C gerührt. Nach wäßriger Aufarbeitung (Extraktion mit Ethylacetat), Trocknen über Natriumsulfat und Einengen werden 5,5 g (73 % der Theorie) eines Öls erhalten.

Charakterisierung:

$^1$H-NMR ($CDCl_3$, 250 MHz): $\delta$ = 1,42 (3H), 4,05 (2H), 5,08 (2H), 6,80-7,52 (7H).

Herstellung von Ausgangssubstanzen:

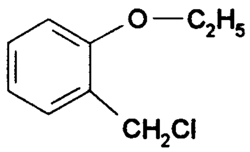

(VII-62)

6 g (0,039 mol) 2-Ethoxybenzylalkohol werden in 50 ml Dichlormethan gelöst. Es werden 4,9 g (0,04 mol) Thionylchlorid zugefügt, und die Reaktionsmischung wird 2 Stunden bei Rückflußtemperatur gerührt. Nach wäßriger Aufarbeitung (Extraktion mit Ethylacetat), Trocknen und Einengen der organischen Phase werden 6,3 g (95 % der Theorie) eines Öls erhalten.

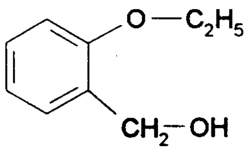

(VI-62)

Zu einer Suspension von 2,0 g (0,053 mol) Natriumborhydrid in 70 ml Ethanol werden bei Raumtemperatur 10 g (0,067 mol) 2-Ethoxybenzaldehyd zugetropft. Nach beendeter Zugabe wird noch 1 Stunde bei 50 °C nachgerührt. Bei Raumtemperatur wird die Reaktionsmischung mit 5 N Salzsäure auf pH 2-3 eingestellt. Die wäßrige Phase wird mehrmals mit Ethylacetat extrahiert. Die vereinigten organischen Phasen werden nach Trocknen über Natriumsulfat eingeengt, und es werden 6,3 g (78 % der Theorie) eines hellen Öls erhalten.

Charakterisierung: IR: 3 600; (OH) $cm^{-1}$

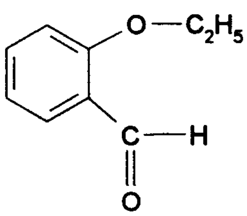

(V-62)

12,2 g (0,1 mol) Salicylaldehyd werden in 100 ml Dimethylformamid gelöst. Nach portionsweiser Zugabe von 3 g (0,1 mol) 80 %igem Natriumhydrid wird bis zur Beendigung der Wasserstoff-Entwicklung bei Raumtemperatur gerührt. Es werden 11 g (0,1 mol) Ethylbromid zugefügt, und die Reaktionsmischung wird 2 Stunden bei 50 °C gerührt. Nach wäßriger Aufarbeitung (Extraktion mit Toluol), Trocknen der organischen Phase über Natriumsulfat und Einengen werden 12 g (80 % der Theorie) eines hellen Öles erhalten, das ohne weitere Reinigung weiter umgesetzt werden kann.

Nach der im Beispiel 62 angegebenen Methode wird auch die in dem folgenden Beispiel aufgeführte Verbindung hergestellt.

**Beispiel 63**

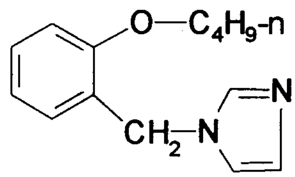

(I-63)

Man erhält die Verbindung in Form einer öligen Flüssigkeit

**Beispiel 64**

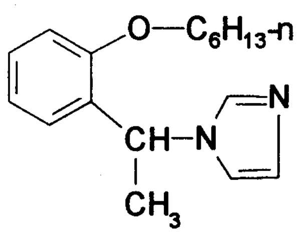

(I-64)

Zu einer Lösung von 5,5 g (0,023 mol) 2-Chlor-2-(2-hexyloxyphenyl)-ethan in 20 ml Dimethylformamid werden 2,1 g (0,023 mol) Natriumimidazolid, gelöst in 5 ml Dimethylformamid, zugegeben. Die Reaktionsmischung wird 8 Stunden bei 60 °C gerührt. Nach wäßriger Aufarbeitung (Toluol), Trocknen der organischen Phase über Natriumsulfat und Einengen werden 5,1 g (82 % der Theorie) eines Öles erhalten, das langsam kristalliseirt. Fp.: 56-57 °C

Herstellung von Ausgangssubstanzen:

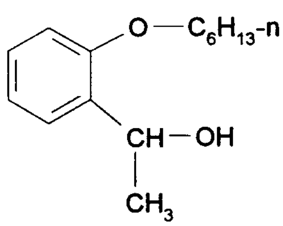

(VI-63)

Zu einer Suspension von 1,7 g (0,045 mol) Natriumborhydrid in 60 ml Ethanol werden bei Raumtemperatur 10 g (0,045 mol) 2-Hexyloxyacetophenon zugegeben. Die Reaktionsmischung wird nach Zugabe 3 Stunden bei 60 °C nachgerührt, dann nach Abkühlen auf Raumtemperatur unter Kühlung mit 5 N Salzsäure auf pH 2-3 eingestellt. Die wäßrige Phase wird mit Ethylacetat extrahiert. Die vereinigten organischen Phasen werden getrocknet und eingeengt. Es werden 7,5 g (75 % der Theorie) eines zähen, hellen Öls erhalten.

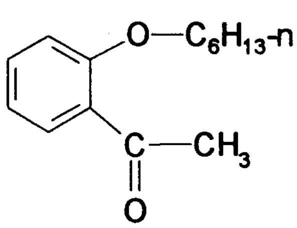

(IV-63)

10 g (0,073 mol) 2-Hydroxy-acetophenon werden in 70 ml Dimethylformamid gelöst; zu dieser Lösung werden 2,2 g (0,073 mol) 80 %iges Natriumhydrid portionsweise zugegeben. Nach Beendigung der Wasserstoffentwicklung werden 12 g (0,073 mol) n-Hexylbromid zugefügt. Die Reaktionsmischung wird 2 Stunden bei 50 ° C gerührt. Nach wäßriger Aufarbeitung (Extraktion mit Toluol) Trocknen der organischen Phase über Natriumsulfat und Einengen werden 14,5 g (91 % der Theorie) eines hellen Öls erhalten, das ohne weitere Reinigung umgesetzt werden kann.

Nach den im Beispiel 64 angegebenen Methoden werden auch die in der folgenden Tabelle 6 aufgeführten Verbindungen der Formel (I) hergestellt.

**Tabelle 6**

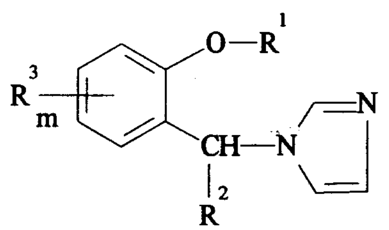

(I)

| Beispiel-Nr. | Verbin.-Nr. | $R^1$ | $R^2$ | $R^3_m$ | Schmelzpunkt [ C] |
|---|---|---|---|---|---|
| 65 | I-65 | $-C_7H_{15}$-n | $CH_3$ | - | Öl |
| 66 | I-66 | $-C_8H_{17}$-n | $CH_3$ | - | Öl |
| 67 | I-67 | $-C_{12}H_{25}$-n | $CH_3$ | - | Öl |
| 68 | I-68 | $-C_6H_{13}$-n | H | 4-$C_2H_5$ | Öl |
| 69 | I-69 | $-C_8H_{17}$-n | H | 4-$C_2H_5$ | Öl |
| 70 | I-70 | $-C_8H_{17}$-n | H | 4-$CH(CH_3)_2$ | Öl |

**Herstellung weiterer Ausgangssubstanzen:**

**Beispiel 71**

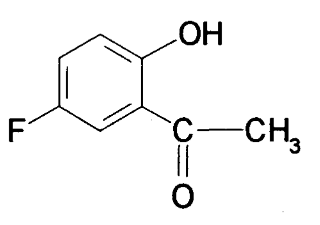

(II-63)

53,7 g (0,35 Mol) Essigsäure-4-fluorphenylester werden bei 60 C über 1,25 Stunden mit 126 g Aluminiumchlorid versetzt, wobei die Temperatur des Reaktionsgemisches auf etwa 115 C ansteigt. Das Reaktionsgemisch wird weitere 4 Stunden bei 115 C nachgerührt, dann auf Raumtemperatur abgekühlt und in 2 Liter Eiswasser eingerührt. Man säuert durch Zugabe von Salzsaure an und rührt 1,5 Stunden nach. Der ausgefallene Feststoff wird abgesaugt und getrocknet. Man erhält auf diese Weise 46,2 g (86 % der Theorie) an 2-Hydroxy-5-fluoracetophenon in Form einer Festsubstanz vom Schmelzpunkt 54 C.

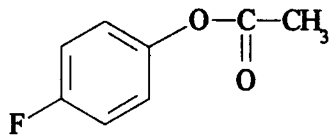

Ein Gemisch aus 47,2 g (0,42 Mol) 4-Fluorphenol und 42,9 g (0,42 Mol) Acetanhydrid wird bei Raumtemperatur unter Rühren mit 0,5 ml konzentrierter Schwefelsäure versetzt, wobei sich das Reaktionsgemisch auf etwa 90 C erwärmt. Man rührt das Reaktionsgemisch weitere 2 Stunden bei 80 C gibt es dann auf Eiswasser und extrahiert mit Dichlormethan. Die organische Phase wird mit wäßriger Natriumhydrogencarbonat-Lösung gewaschen, über Natriumsulfat getrocknet und durch Abziehen des Lösungsmittels unter vermindertem Druck eingeengt. Der verbleibende Rückstand wird unter vermindertem Druck destilliert. Man erhält auf diese Weise 53,8 g (82,9 % der Theorie) an Essigsäure-4-fluorphenylester in Form einer Flüssigkeit vom Siedepunkt 84 C/20 Torr.

Verwendungsbeispiele

Beispiel A

Anstrichmittel-Test

Die fungizide Wirkung in Anstrichmitteln wird durch Prüfung der Schimmelfestigkeit der mit den Anstrichmitteln erhaltenen Anstriche bestimmt.

Prüfmethode:

Das zu prüfende Anstrichmittel wird beidseitig auf eine geeignete Unterlage gestrichen.

Um praxisnahe Ergebnisse zu erhalten wird ein Teil der Prüflinge vor dem Test auf Schimmelfestigkeit mit fließendem Wasser (24 h; 20 ° C ausgelaugt; ein anderer Teil wird mit einem warmen Frischluftstrom behandelt (7 Tage; 40 ° C).

Die so vorbereiteten Prüflinge werden auf einen Agar-Nährboden gelegt. Prüflinge und Nährboden werden mit Pilzsporen kontaminiert. Nach 1- bis 3-wöchiger Lagerung bei 29 ± 1 ° C und 80 bis 90 % rel. Luftfeuchte wird abgemustert. Der Anstrich ist dauerhaft schimmelfest, wenn der Prüfling pilzfrei bleibt oder höchstens einen geringen Randbefall erkennen läßt.

Zur Kontamination werden Pilzsporen folgender neun Schimmelpilze verwendet, die als Anstrichzerstörer bekannt sind oder häufig auf Anstrichen abgetroffen werden:

| | |
|---|---|
| 1. Alternaria tenuis | 2. Aspergillus flavus |
| 3. Aspergillus niger | 4. Aspergillus ustus |
| 5. Cladosporium herbarum | 6. Paecilopmyces variotii |
| 7. Penicillium citrinum | 8. Aureobasidium pullulans |
| 9. Stachybotrys atra Corda | |

Styrol-Acrylat-Dispersionsfarbe

| Zusammensetzung: | |
|---|---|
| Bestandteile | kg |
| Bayer Titan RKB2 | 14 - (Titandioxid) |
| Talkum V 58 | 10 - (Magnesiumsilikat) |
| Durcal 5 | 76 - (Calcit $CaCO_3$) |
| Walsroder MC 3000s 2 %ig | 35 - (Methylcellulose) |
| Calgon N 10 %ig | 3 - (Polyphosphat) |
| Pigmentverteiler A 10 %ig | 2 - (Polyarylsäuresalz) |
| Wasser | 4 |
| Nopco 8034 E (1:1 in Texanol) | 1 |
| Testbenzin | 2 |
| Butyldiglycolacetat | 2 |
| Acronal 290 D | 22 - (Polyacrylsäureester) |
| | 171 |

Feststoffgehalt: 111 kg = 64,3 %

Polyvinylacetat-Dispersionsfarbe

| Zusammensetzung: | | |
|---|---|---|
| Handelsname | Gew.-Teile | chemische Bezeichnung |
| Bayer Titan RKB2 | 35 | Titandioxid |
| EWO-Pulver | 20 | Schwerspat ($BaSO_4$) |
| Micro Mica | 15 | Magnesiumaluminiumsilikat |
| Talkum | 5 | Magnesiumsilikat wasserhaltig |
| Kreide BLP2 | 25 | Calcit ($CaCO_3$) |
| Mowilith DM 2H (Binde) | 80 | Polyvinylacetat |
| Tylose MH 2000 K | 20 | Methylhydroxyethylcellulose |
| Calgon N 10 %ig | 2,5 | Polyphosphat |
| Pigmentverteiler A 10 %ig | 2,5 | Polyacrylsäuresalz |
| $H_2O$ | 5,0 | dest. Wasser |
| Gesamt | 210,0 | |

Feststoffgehalt: 140 kg = 66%

Proben der obengenannten Dispersionsfarben werden mit 0,1 bis 1,5 % des mikrobiziden Mittels gemäß Beispiel versetzt und wie in den beigefügten Methodenbeschreibungen angegeben auf Schimmelfestigleit getestet.

Ergebnisse:

Wenn die Dispersionsfarben 0,5 % mikrobizides Mittel gemäß Beispielen enthalten, liefern sie schimmelfeste Anstriche.

**Patentansprüche**

**1.** Verwendung von Benzylimidazolyl-Derivaten der Formel

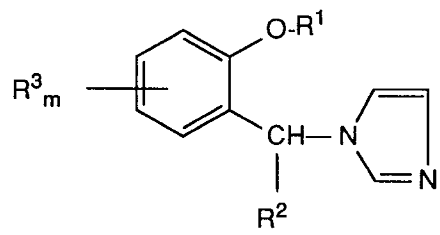

(I)

in welcher

$R^1$ für Halogenalkyl, gegebenenfalls substituiertes Aryl, gegebenenfalls substituiertes Aralkyl, Alkenyl, Halogenalkenyl, gegebenenfalls substituiertes Aralkenyl, Alkinyl, gegebenenfalls substituiertes Aralkinyl, Alkylcarbonyl, gegebenenfalls substituiertes Arylcarbonyl, Alkylaminocarbonyl oder Trimethylsilylalkyl steht,

$R^2$ für Wasserstoff oder Alkyl steht,

$R^3$ für Halogen, Alkyl, Halogenalkyl, Alkoxy, Nitro oder Cyano steht und

m für die Zahlen 0, 1, 2 oder 3 steht, oder

$R^1$ für Alkyl mit 1 bis 5 oder 10 bis 20 Kohlenstoffatomen steht, und

$R^2$ für Wasserstoff steht, oder

$R^1$ für Alkyl mit 1 bis 20 Kohlenstoffatomen steht, und

$R^2$ für Alkyl mit 1 bis 6 Kohlenstoffatomen steht,

sowie von deren Säureadditions-Salzen und Metallsalz-Komplexen als Mikrobizide zum Schutz von technischen Materialien.

**2.** Verwendung gemäß Anspruch 1, dadurch gekennzeichnet, daß man Verbindungen der Formel (I) einsetzt, in denen

$R^1$ für Halogenalkyl mit 1 bis 6 Kohlenstoffatomen und 1 bis 5 gleichen oder verschiedenen Halogenatomen oder für Aryl mit 6 bis 10 Kohlenstoffatomen steht, wobei jeder dieser Arylreste einfach bis vierfach, gleichartig oder verschieden substituiert sein kann durch Halogen, Alkyl mit 1 bis 4 Kohlenstoffatomen, Alkoxy mit 1 bis 4 Kohlenstoffatomen, gegebenenfalls einfach bis dreifach durch Halogen substituiertes Phenyl, gegebenenfalls einfach bis dreifach durch Halogen substituiertes Phenoxy, gegebenenfalls einfach bis dreifach durch Halogen substituiertes Phenylalkoxy mit 1 bis 4 Kohlenstoffatomen im Alkoxyteil und/oder Cyano, oder

für Aralkyl mit 6 bis 10 Kohlenstoffatomen im Arylteil und 1 bis 4 Kohlenstoffatomen im Alkylteil steht, wobei jeder dieser Aralkyl-Reste einfach bis vierfach, gleichartig oder verschieden substituiert sein kann durch Halogen, Alkyl mit 1 bis 4 Kohlenstoffatomen, Alkoxy mit 1 bis 4 Kohlenstoffatomen, gegebenenfalls einfach bis dreifach durch Halogen substituiertes Phenyl, gegebenenfalls einfach bis dreifach durch Halogen substituiertes Phenoxy, gegebenenfalls einfach bis dreifach durch Halogen substituiertes Phenylalkoxy mit 1 bis 4 Kohlenstoffatomen im Alkoxyteil und/oder Cyano, oder

für Alkenyl mit 3 bis 8 Kohlenstoffatomen, für Halogenalkenyl mit 3 bis 8 Kohlenstoffatomen und 1 bis 5 gleichen oder verschiedenen Halogenatomen steht, oder für Aralkenyl mit 6 bis 10 Kohlenstoffatomen im Arylteil und 3 bis 8 Kohlenstoffatomen im Alkenylteil steht, wobei sowohl der Arylteil als auch der Alkenylteil jeweils einfach bis dreifach, gleichartig oder verschieden durch Halogen und/oder Alkyl mit 1 bis 4 Kohlenstoffatomen substituiert sein kann, oder

für Alkinyl mit 3 bis 8 Kohlenstoffatomen, Halogenalkinyl mit 3 bis 8 Kohlenstoffatomen und 1 bis 5 gleichen oder verschiedenen Halogenatomen oder für Aralkinyl mit 6 bis 10 Kohlenstoffatomen im Arylteil und 3 bis 8 Kohlenstoffatomen im Alkinylteil steht, wobei

der Arylteil jeweils einfach bis dreifach, gleichartig oder verschieden substituiert sein kann durch Halogen und/oder Alkyl mit 1 bis 4 Kohlenstoffatomen, oder

für Alkylcarbonyl mit 1 bis 8 Kohlenstoffatomen im Alkylteil oder Arylcarbonyl mit 6 bis 10 Kohlenstoffatomen im Arylteil steht, wobei der Arylteil jeweils einfach bis dreifach, gleichartig oder verschieden durch Halogen und/oder Alkyl mit 1 bis 4 Kohlenstoffatomen substituiert sein kann, oder für Alkylaminocarbonyl mit 1 bis 15 Kohlenstoffatomen in der Alkylgruppe oder für Trimethylsilylmethyl steht,

$R^2$ für Wasserstoff oder geradkettiges oder verzweigtes Akyl mit 1 bis 4 Kohlenstoffatomen steht,
$R^3$ für Fluor, Chlor, Brom, geradkettiges oder verzweigtes Alkyl mit 1 bis 8 Kohlenstoffatomen, Halogenalkyl mit 1 bis 6 Kohlenstoffatomen und 1 bis 5 gleichen oder verschiedenen Halogenatomen, für Alkoxy mit 1 bis 4 Kohlenstoffatomen, Nitro oder Cyano steht, und
m für die Zahlen 0, 1, 2 oder 3 steht, oder
$R^1$ für geradkettiges oder verzeigtes Alkyl mit 1 bis 5 oder 10 bis 12 Kohlenstoffatomen steht,
$R^2$ für Wasserstoff steht, oder
$R^1$ für geradkettiges oder verzweigtes Alkyl mit 1 bis 12 Kohlenstoffatomen steht,
$R^2$ für geradkettiges oder verzweigtes Alkyl mit 1 bis 4 Kohlenstoffatomen steht.

**3.** Verfahren zur Bekämpfung von unerwünschten Mikroorganismen im Materialschutz, dadurch gekennzeichnet, daß man Benzylimidazolyl-Derivate der Formel (I) gemäß Anspruch 1 bzw. deren Säureadditions-Salze oder Metallsalz-Komplexe auf die Miokroorganismen und/oder deren Lebensraum ausbringt.

**4.** Mikrobizide Mittel zum Schutz von technischen Materialien enthaltend neben den üblichen Bestandteilen mindestens eine Verbindung der Formel (I) nach Anspruch 1.

Europäisches Patentamt

# EUROPÄISCHER RECHERCHENBERICHT

Nummer der Anmeldung
EP 93 11 8594

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | EP-A-0 297 352 (BAYER AG)<br>* Seite 3 - Seite 4, Zeile 4 *<br>* Seite 9, Zeile 20 - Zeile 51 *<br>* Seite 15, Tabelle 3 *<br>* Ansprüche 5-7 *<br>--- | 1-4 | A01N43/50<br>B27K3/34 |
| X | CHEMICAL PATENTS INDEX, BASIC ABSTRACTS JOURNAL<br>Week 8746, 20. Januar 1988<br>Derwent Publications Ltd., London, GB;<br>AN 87-324490/46<br>& JP-A-62 230 703 (MITSUI TOATSU CHEM. INC.)<br>* Zusammenfassung *<br>--- | 4 | |
| Y,D | CHEMICAL PATENTS INDEX, BASIC ABSTRACTS JOURNAL<br>Week 8709, 29. April 1987<br>Derwent Publications Ltd., London, GB;<br>AN 87-061165/09<br>& JP-A-62 016 404 (MITSUI TOATSU CHEM. INC.)<br>* Zusammenfassung *<br>--- | 1-4 | RECHERCHIERTE SACHGEBIETE (Int.Cl.5)<br>A01N<br>B27K |
| Y,D | DE-A-24 18 502 (SCHERING AG)<br>* Seite 1 - Seite 3, Absatz 1 *<br>--- | 1-4 | |
| A | FR-A-2 557 874 (MITSUI TOATSU CHEMICALS, INC.)<br>* Seite 1 - Seite 4, Zeile 33 *<br>----- | 1-4 | |

Der vorliegende Recherchenbericht wurde für alle Patentansprüche erstellt

| Recherchenort | Abschlußdatum der Recherche | Prüfer |
|---|---|---|
| DEN HAAG | 10. März 1994 | Muellners, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)